# EUROPÄISCHE PATENTSCHRIFT

(11) **EP 2 505 850 B1**
(45) Veröffentlichungstag und Bekanntmachung des Hinweises auf die Patenterteilung: **04.03.2020**
(21) Anmeldenummer: 12000540.0
(22) Anmeldetag: 27.01.2012
(51) Int. Cl.: F04D 29/046, F16C 27/02, H02K 5/167, F16C 35/02, F04D 29/62

(54) **Lagerbuchse**
Bearing bushing
Douille de palier

(30) Priorität: 30.03.2011 DE 102011015601
(43) Veröffentlichungstag der Anmeldung: 03.10.2012
(73) Patentinhaber: WILO SE, 44263 Dortmund (DE)
(72) Erfinder: Materne, Thomas, 59348 Lüdinghausen (DE); Strelow, Günter, 44801 Bochum (DE); Küster, Bernd, 44379 Dortmund (DE)
(74) Vertreter: Cohausz Hannig Borkowski Wißgott

(56) Entgegenhaltungen:
- EP-A1- 2 040 354
- EP-A2- 1 024 584
- DE-A1- 2 416 878
- JP-A- 2006 340 416

## Beschreibung

Die vorliegende Erfindung betrifft eine Lagerbuchse zur Aufnahme eines Lagers für einen Rotor einer elektrischen Maschine, insbesondere einer elektromotorisch angetriebenen Kreiselpumpe, mit einer im Wesentlichen zylindrischen Wand aus Kunststoff, die das Lager in seinem eingesetzten Zustand umgibt.

Lagerbuchsen dienen zur Befestigung von Lagern, durch die eine drehbare Welle geführt ist. Derartige Anordnungen sind insbesondere bei Rotoren von Elektromotoren und Generatoren von Bedeutung, deren Welle an zwei Stellen im Rotorraum gelagert ist. Bei elektromotorisch angetriebenen Kreiselpumpen mit nasslaufendem Rotor sind die Lager und die entsprechenden Lagerbuchsen von dem geförderten Medium umspült. Nassläuferpumpen weisen zur hermetischen Trennung des Rotorraums vom Stator ein Spaltrohr oder einen Spalttopf auf, in dem eine Lagerbuchse eingesetzt und drehfest gehalten ist. Des Weiteren sind Spalttöpfe mit integralen Mitteln zur Befestigung von Lagern an deren Bodenseite bekannt, wie es z.B. in EP 2040354 A1 offenbart ist, wobei hier ein Lager oder Lagerträger von Kunststoff umspritzt wird. Die DE 2416878 A1 beschreibt dagegen, ein Lager am Spalttopfboden durch einen separaten Lagerträger in Gestalt einer Klemmbrille aus Metall oder Kunststoff zu fixieren.

Beispielsweise offenbart die europäische Patentanmeldung EP 1024 584 A2 einen Spalttopf für eine Kreiselpumpe, in dem zwei Lager zur Lagerung der Motorwelle angeordnet sind, wobei zumindest das am Boden des Spalttopfes angeordnete Lager axial, radial und drehfest formschlüssig in dem Spalttopf gehalten ist. Der Boden des Spalttopfes ist kugelförmig und weist einen Lagersitz zur Aufnahme eines Radialgleitlagers auf. Der Lagersitz hat vier Rastarme, die sich axial in Richtung der Pumpe verjüngend erstrecken. Die Rastarme sind einstückig an den Boden angespritzt und können elastisch nach außen federn. An ihren freien Enden weisen sie jeweils einen nach innen ragenden Vorsprung auf. Jeder Vorsprung greift in eine Ausnehmung des Lagers ein, die an der Außenseite des Lagers eingeformt sind. Zwischen den Rastarmen sind starre Zentrierungselemente angeordnet, durch die Lager radial formschlüssig gehalten und zentriert wird.

Des Weiteren ist aus dem europäischen Patent EP 1 313 198 B1 eine Lagerbuchse der im einleitenden Teil genannten Gattung bekannt. Sie beschreibt einen Spalttopf einer elektrisch angetriebenen Pumpe, an dessen Boden eine Buchse für ein Lager vorgesehen ist. Diese Buchse ist von einer im Wesentlichen zylindrischen, im Querschnitt kreisförmigen Wand gebildet, die einen Teil des bodenseitigen Endes des Spaltrohes ist. Die Wand besitzt an ihrer in den Rotorraum gerichteten Stirnseite eine Schulter, von der ein ringförmiger Kragen axial absteht. In dem Lagersitz ist ein Lager eingesetzt, das axial über die Schulter und über den Kragen hervorsteht und auf Höhe der Schulter einen Rücksprung aufweist. Durch den Rücksprung ist auch an dem Lager eine Schulter gebildet, so dass auf dieser Schulter und der gegenüberliegenden Schulter des Sitzes, d.h. zwischen dem Lager und dem Kragen ein O-Ring liegt, der das Lager radialfixiert. Der Kragen wird von einem ringförmigen Rückhalteelement umgriffen, das stirnseitig das Lager abdeckt und axial fixiert.

In der Europäischen Patentanmeldung EP 2 017479 A2 ist ein Spalttopf aus Kunststoff beschrieben, der im Elektromotor den Rotor vom Stator trennt und von der zu pumpenden Flüssigkeit durchflossen ist. An dem dem Pumpenlaufrad abgewandten Ende bildet der Spalttopf einen koaxialen Rohrabschnitt geringeren Durchmessers als der übrige Spalttopf. In diesem Rohrabschnitt liegt ein Radiallager als Kohlegleitlager koaxial ein und nimmt das hintere Ende der nicht dargestellten Motoren- bzw. Pumpenwelle auf. Auf dem Außenmantel des Radiallagers sitzt in einem dem Pumpenläufer zugewandten Bereich ein ringförmiges Fixierelement aus Ethylen-Propylen-Dien-Kautschuk (EPDM) koaxial auf, wobei die Befestigung des Fixierelements auf dem Radiallager form- und/oder kraftschlüssig ist.

Nachteilig bei den bekannten Lagerbuchsen aus Kunststoff ist, dass diese einen viel größeren Ausdehnungskoeffizienten aufweisen als das Material, aus dem das Lager hergestellt ist. Dies führt dazu, dass bei hohen Temperaturen, die durch Reibung am Lager entstehen, insbesondere aber auch aufgrund einer hohen Temperatur des von der Pumpe geförderten Mediums, beispielswiese bei einer Verwendung der Lagerbuchse in einer Heizungspumpe, vorliegen können, ein Lösen des Pressverbundes zwischen Lager und Lagerbuchse erfolgt, so dass ein Spiel zwischen Lager und Lagerbuchse entsteht. Die führt wiederum dazu, dass die Rotorwelle radiales Spiel erhält und dadurch vibrieren kann, woraus ein erhöhter Verschleiß der Bauteile und unangenehme Geräusche resultieren. Demgegenüber kommt es bei niedrigen Temperaturen zu einem zu starken Pressverbund zwischen Lager und Buchse, so dass die Buchse mechanisch überlastet werden und brechen kann.

Ein weiterer Nachteil des Standes der Technik besteht darin, dass der Pressverbund zwischen Lager und Kunststoffbuchse mit der Zeit nachlässt, da der Kunststoff sich nach und nach verformt, d.h. relaxiert, so dass die das Lager haltenden Kräfte im Kunststoff nachlassen. Die führt ebenfalls dazu, dass sich mit der Zeit zwischen Lager und Buchse ein Spiel ergibt, wodurch Laufunruhe, Geräusche und eine erhöhte mechanische Belastung durch Vibrationen entstehen.

Aufgabe der vorliegenden Erfindung ist es, eine Lagerbuchse für die Befestigung eines Lagers innerhalb eines Spaltrohes oder Spalttopfes bereitzustellen, die einfach und preiswert herzustellen ist, eine leichte Montage des Lagers ermöglicht oder selbst leicht montiert werden kann, und die einen dauerhaften radialen und axialen Sitz des Lagers gewährt, ohne dass zusätzliche Befestigungsmittel erforderlich sind.

Diese Aufgabe wird durch eine Lagerbuchse mit den Merkmalen des Anspruchs 1 gelöst. Vorteilhafte Weiterbildungen der Erfindung sind in den Unteransprüchen formuliert.

Erfindungsgemäß wird eine Lagerbuchse zur Aufnahme eines zylindrischen Lagers für einen Rotor einer elektrischen Maschine, insbesondere einer elektromotorisch angetrieben Kreiselpumpe, vorgeschlagen, mit einer im Wesentlichen zylindrischen Wand aus Kunststoff, die das Lager in seinem eingesetzten Zustand umgibt, wobei die Wand Sektorabschnitte aufweist, deren radial innenliegende Seiten Anlageflächen bilden, zwischen denen das Lager kraftschlüssig haltbar ist, und die Wand zwischen den Sektorabschnitten radial nach außen gerichtete Ausbuchtungen aufweist.

Die Grundidee der vorliegenden Erfindung besteht darin, die geometrische Form einer Lagerbuchse derart zu wählen, dass sich die in ihr wirkenden Kräfte und Spannung über den gesamten Einsatztemperatur- und Einsatzdruckbereich gleichmäßig verteilen und sich die Lagerbuchse in Abhängigkeit dieser Spannungen und Kräfte zerstörungsfrei elastisch verformen kann sowohl im Falle einer Ausdehnung als auch bei Kontraktion.

Die wird durch die erfindungsgemäße Geometrie der vorgeschlagenen Lagerbuchse erreicht. Die Sektorabschnitte sind solche Umfangsabschnitte der Wand, an denen ein Lager in der Lagerbuchse nur partiell an der Wand anliegt. Es liegt an den innenliegenden Anlageflächen der Lagerbuchse an, die das Lager kraftschlüssig halten und radial fixieren. Hierdurch werden keine weiteren Mittel zum Halten des Lagers benötigt.

Die Anlageflächen können in Umfangsrichtung der Wand vergleichsweise breit sein, alternativ jedoch auch sehr schmal ausgebildet sein, so dass ein Lager nur minimal partiell zur Anlage an der Buchse kommt. In den Sektorabschnitten besteht eine Presspassung zwischen Lager und Buchse, während die Wand im Bereich der Ausbuchtungen in einem Abstand zu dem Lager verläuft. Dies bewirkt, dass die von den Sektorabschnitten aufgenommenen Kräfte in diese Wandbereiche zwischen ihnen abgeleitet werden, so dass sich die Wand aufgrund der fehlenden Anlage zum Lager dort leicht elastisch verformen kann.

Des Weiteren bewirken die Anlageflächen eine Zentrierung des Lagers in der Lagerbuchse, so dass dieses exakt koaxial in der Buchse zum Einliegen kommen kann. Schließlich bewirken die Ausbuchtungen, dass bei mediumumspülten Lagern, wie sie bei Nassläufermotoren für Pumpen vorhanden sind, das Medium durch die Ausbuchtungen hinter das Lager fließen kann. Hierdurch wird eine starke Wärmeabfuhr erreicht und verhindert, dass sich Schmutzpartikel in dem sonst zwischen Lager und Buchse vorhandenen Spalt festsetzen, die zu einer erhöhten Reibung und einem dadurch erhöhten Verschließ führen.

Erfindungsgemäß ist die Wand in Umfangsrichtung zumindest teilweise durchgehend geschlossen. Dies bedeutet, dass die Sektorabschnitte und die zwischen ihnen liegenden Bereiche ineinander übergehen und die Wand an keiner Stelle entlang ihrer gesamten axialen Erstreckung unterbrochen ist. Dies hat den Vorteil, dass sich die Spannungen und Kräfte über den gesamten Umfang der Wand gleichmäßig verteilen. Es kann dadurch vermieden werden, dass Brüche an Stellen passieren, die höher kraftbeaufschlagt werden als andere Stellen der Wand.

Des Weiteren sind die Ausbuchtungen durch Bogenabschnitte der Wand gebildet. Dies bewirkt, dass die von den Sektorabschnitten aufgenommenen Radialkräfte in die zwischen ihnen liegenden Abschnitte, d.h. die Bogenabschnitte, umgeleitet und in Umfangsrichtung verteilt werden. Die Bogenabschnitte schließen sich in diesem Fall unmittelbar an die Sektorabschnitte an. Sie verbinden die zueinander gerichteten Endseiten zweier benachbarter Sektorabschnitte bogenförmig. Insbesondere können die Bogenabschnitte teilkreiszylinderförmig sein, so dass sie die zueinander gerichteten Endseiten zweier benachbarter Sektorabschnitte in der Form eines Teils eines Kreiszylinders miteinander verbinden.

Vorzugsweise ist der Krümmungsradius der Bogenabschnitte kleiner als der Abstand einer Anlagefläche zur Lagerbuchsenachse, so dass die Ausbuchtungen einen Radius besitzen der kleiner als der durch die Anlageflächen zur Lagerbuchsenachse definierte Radius ist. Da die zueinander gerichteten Endseiten zweier benachbarter Sektorabschnitte durch die Bogenabschnitte verbunden sind, liegen die Endseiten auf dem Kreiszylinder, so dass sich durch den geringeren Krümmungsradius die radialen Ausbuchtungen ergeben, die aus Sicht der Lagerbuchsenachse konkav geformt sind. Insbesondere kann der Krümmungsradius zwischen vier und sechs Zehntel des Abstandes zwischen Anlagefläche und Lagerbuchsenachse betragen.

In einer bevorzugten Ausführungsvariante kann die Wand in Umfangsrichtung wellenförmig verlaufen. Dies bedeutet, dass die Wand in Umfangsrichtung abwechselnd radial nach innen und radial nach außen verläuft. Die Anlageflächen sind in diesem Fall vergleichsweise schmal und werden durch die innenliegenden Seiten der Wellentäler gebildet. Die Wellenform führt zu einer Spannungshomogenität innerhalb der Wand.

Erfindungsgemäß kann die Wand mehrere Ausbuchtungen aufweisen, insbesondere drei, vier, fünf oder mehr derartiger Ausbuchtungen, die in gleichen Winkelabständen zueinander verteilt sind. Insbesondere kann die Form der Wand epizykloidisch sein, d.h. im Querschnitt eine Epizykloide beschreiben.

Des Weiteren kann die Dicke der Wand der Sektorabschnitte zumindest teilweise größer sein, als die Dicke der Wand zwischen den Sektorabschnitten. Diese werden dadurch stabil und es wird eine Überbeanspruchung der Sektorabschnitte verhindert, da diese die Pressverbindung mit dem Lager bilden.

Vorzugsweise weist die Lagerbuchse einen Boden auf. Dies bedeutet, dass sich die Wand von dem Boden in axialer Richtung weg erstreckt und die Lagerbuchse an zumindest einer Seite, der Bodenseite, geschlossen ist. Insbesondere kann die Wand mit dem Boden einstückig ausgebildet sein. Die geometrische Form der Lagerbuche ist dadurch an einem axialen Ende fixiert und hinsichtlich ihrer Elastizität eingeschränkt. In einer vorteilhaften Weiterbildung sind der Boden und die Wand aus demselben Kunststoffmaterial und insbesondere in ein und demselben Spritzvorgang hergestellt. Auf diese Weise ist kein separater Herstellungsschritt erforderlich.

In einer weiteren vorteilhaften Weiterbildung der erfindungsgemäßen Lagerbuchse weist ihr Boden zumindest einen Abstandshalter auf, an dem das Lager im eingesetzten Zustand anliegt. Beispielsweise kann der Abstandshalter zapfenförmig vom Boden abstehen. Der Abstandshalter bildet zum Einen einen Anschlag für das Lager in axialer Richtung und kann damit zur Aufnahme von Axialkräften dienen, die von dem Lager aufgenommen werden. Zum Anderen bewirkt der Abstandshalter, dass das Lager nicht an dem Boden anliegt. Die hat wiederum zwei Vorteile. Zu einen kann bei mediumumspülten Lagern das durch die Ausbuchtungen geführte Medium hinter dem Lager zirkulieren, so dass ein effektiver Abtransport der Wärme des Lagers erreicht wird, zum anderen wird die T-förmige Übergangsstelle zwischen Wand und Boden nicht überbeansprucht. Dies könnte passieren, wenn im Falle fehlender Abstandshalter das Lager an seinem zum Boden gerichteten Ende eine äußere Umfangskante aufweist, die nicht genug abgerundet oder abgefast ist, so dass das Lager beim Einsetzen in die Lagerbuchse vollumfänglich gegen die Innenrundung drückt, die zur Verstärkung der Übergangsstelle zwischen Wand und Boden dient. Erfindungsgemäß können auch zwei, drei oder mehr Abstandshalter vorgesehen sein. Diese können formgleich ausgebildet sein. Ferner können die Abstandshalter symmetrisch zueinander, insbesondere in gleichen Winkelabständen am Boden angeordnet sein.

Zusätzlich oder alternativ zu dem/den Abstandshalter(n) können die Sektorabschnitte in ihrer axialen Erstreckungsrichtung gegenüber der Wand im Bereich der Ausbuchtungen verlängert sein und an ihren offenen Enden Rastnasen zum übergreifen eines eingesetzten Lagers aufweisen. Auf diese Weise kann das Lager zwischen den Rastnasen und den Abstandhaltern axial fixiert werden.

In einer weiteren vorteilhaften Ausführungsvariante können zumindest die Anlageflächen der Sektorabschnitte der Wand in axialer Richtung geringfügig zu Lagerbuchsenachse geneigt sein. Die bewirkt eine gleichmäßige Verteilung der mechanischen Spannung entlang einem Großteil der axialen Länge der Lagerbuchse. Insbesondere kann die Neigung in einem Winkel zwischen 0,05° und 5°, vorzugsweise zwischen 0,5° und 2° zur Lagerbuchsenachse verlaufen.

Damit die Fläche, mit der die Buchse am Lager zur Anlage kommt, möglichst groß ist, können die Anlageflächen konkav geformt sein. Damit die Befestigung eines Lagers in der Lagerbuchse optimal erfolgt, kann eine Presspassung zwischen diesen Teilen verwendet werden. Hierzu kann der Abstand der Anlageflächen zur Lagerbuchsenachse 0,5mm bis 1mm kleiner als der Außenradius des Lagers sein.

Des Weiteren ist es von Vorteil, wenn die Wand an ihrer zur Lagerbuchsenachse gerichteten Innenseite zumindest einen Vorsprung aufweist, der in einer Ausnehmung des Lagers in seinem eingesetzten Zustand formschlüssig einliegen kann. Dieser Formschluss fixiert das Lager in Umfangsrichtung und verhindert eine rotatorische Relativbewegung zwischen Lager und Lagerbuchse. Der Vorsprung kann an der Wand die Gestalt einer Rippe aufweisen, die sich zumindest teilweise entlang der axialen Länge der Wand erstreckt. Alternativ oder kumulativ kann zumindest ein Vorsprung vom Boden in axialer Richtung abstehen und in eine entsprechende Ausnehmung am Lager eingreifen. Beispielsweise kann der Vorsprung an einem sockelförmigen Abstandshalter angeformt sein.

Erfindungsgemäß wird zudem ein Spaltrohr für Nassläufermotoren vorgeschlagen, das an wenigstens einem axialen Ende eine Lagerbuchse nach einem der vorherigen Ansprüche aufweist. Die Lagerbuchse kann an diesem einen Ende in das Spaltrohr kraftschlüssig eingesetzt sein oder ein Teil des Spaltrohes bilden. Vorzugsweise sind die Lagerbuchse und der Spalttopf einstückig ausgebildet und bilden baulich eine Einheit, die in einem Herstellungsschritt aus Kunststoff gespritzt oder gegossen werden kann. Vorzugsweise bildet der Boden der Lagerbuchse gleichzeitig zumindest einen Teil des Bodens des Spaltrohrs. Das Spaltrohr stellt in diesem Fall einen Spalttopf dar.

Vorzugsweise steht die Wand der Lagerbuchse von dem Boden des Spaltrohrs bzw. Spalttopfes in axialer Richtung vor, so dass die Wand der Lagerbuchse bis auf die Anlageflächen nahezu vollständig, d.h. sowohl außerhalb als auch radial innerhalb der Buchse mediumumströmt ist. Auf die Wand, die in diesem Fall vollständig innerhalb des Spaltrohres bzw. Spalttopfs liegt, wirkt in diesem Fall kein Druck, so dass keine zusätzliche mechanische Beanspruchung vorliegt. Alternativ kann die Wand der Lagerbuchse ein Teil der Wand des Spaltrohres bilden. Dies bedeutet, dass das Spaltrohr selbst die Ausbuchtungen, insbesondere den in Umfangsrichtung wellenförmigen Querschnitt aufweist.

Erfindungsgemäß kann das Spaltrohr auch an seinen beiden axialen Enden eine Lagerbuchse der vorbeschrieben Art aufweisen.

Weitere Merkmale und Vorteile der Erfindung werden nachfolgend anhand von Ausführungsbeispielen und der beigefügten Figuren erläutert. Gleiche Bezugszahlen bedeuten hierbei gleiche Elemente. Es zeigen:
- Fig. 1:: Lagerbuchse im radialen Querschnitt ohne Lager
- Fig. 2:: Lagerbuchse im radialen Querschnitt mit Lager
- Fig. 3:: Lagerbuchse im axialen Querschnitt mit Lager
- Fig. 4:: Lagerbuchse in perspektivischer Darstellung ohne Lager
- Fig. 5:: Lagerbuchse in perspektivischer Darstellung mit Lager

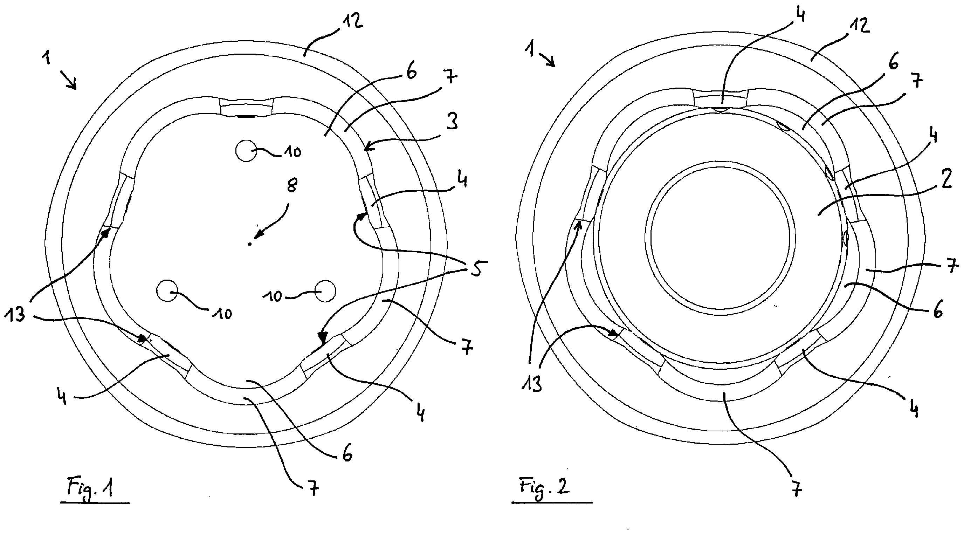

Figur 1 zeigt eine erfindungsgemäße Lagerbuchse 1 zur Aufnahme eines zylindrischen Radiallagers 2 für einen nicht dargestellten Rotor eines Nassläufermotors, insbesondere einer elektromotorisch angetriebenen Kreiselpumpe in einem radialen Querschnitt. Die Lagerbuchse ist aus einem thermoplastischen oder duroplastischen Kunststoff hergestellt, und weist eine zylindrischen, umlaufend geschlossen Wand 3 auf, die das Lager 2 in seinem eingesetzten Zustand umgibt, siehe Figur 2.

Die Wand 3 weist fünf Sektorabschnitte 4 auf, deren radial innenliegende Seiten Anlageflächen 5 bilden, an denen das Lager 2 partiell zur Anlage kommt und zwischen denen das Lager 2 kraftschlüssig haltbar ist bzw. im eingesetzten Zustand gehalten wird. Durch die symmetrische Anordnung der fünf Sektorabschnitte 4 in gleichen Winkelabständen von je 72° wird das Lager 2 innerhalb der Buchse zentriert und radial fixiert. Die Sektorabschnitte 4 bilden eine segmentierte Presspassung über den Umfang des Lagers 2. Die Anlageflächen 5 erstrecken sich über eine im Spritzgusswerkzeug erzeugbare Minimalbreite, wobei der Anlagendurchmesser zusammen mit dem Aussendurchmesser des Lagers 2 eine Presspassung definiert. Die segmentierte Befestigung des Radiallagers 2 in der Lagerbuchse 1 mittels einer Presspassung hat den Vorteil, dass einzelne Segmente im Spritzgusswerkzeug angepasst werden können. Dies führt schließlich zu einem bestmöglichen zentrischen Sitz des Lagers 2.

Zwischen den Sektorabschnitten 4 besitzt die Wand 3 fünf radial nach außen gerichtete Ausbuchtungen 6, die durch Bogenabschnitte 7 der Wand 3 gebildet sind, die in diesem Ausführungsbeispiel teilkreiszylinderförmig sind. Die Erfindung ist jedoch nicht auf teilkreiszylinderförmige Bogenabschnitte beschränkt. In diesen Bogenabschnitten 7 kann sich die geometrische Struktur der erfindungsgemäßen Lagerbuchse 1 verformen. Hierdurch ergibt sich über den gesamten Einsatzbereich der Lagerbuchse 1 eine Pressverbindung. Die Geometrie der Lagerbuchse 1 ist dadurch spannungs- und dehnungsoptimiert. Die Bereiche 7 zwischen den partiellen Anlageflächen 5 sind derart gestaltet, dass sich aufgrund des eingepressten Lagers 2 ein Zustand ähnlicher Spannungen über den Umfang der Lagerbuchse 1 einstellt. Mit einer derartigen Geometrie können hinreichend große Übermaße zwischen den Passungspartnern realisiert werden, ohne dass die von den Materialien vorgegebenen zulässigen Materialgrenzwerte überschritten werden bzw. der Verbund von Lagerbuchse und Lager aufgehoben wird.

Der Krümmungsradius der Bogenabschnitte 7 ist kleiner als der Abstand einer Anlagefläche 5 zur Lagerbuchsenachse 8, so dass die Ausbuchtungen 6 einen Radius rₐ besitzen, der kleiner als der durch die Anlageflächen 5 zur Lagerbuchsenachse 8 definierte Radius rᵢ ist.

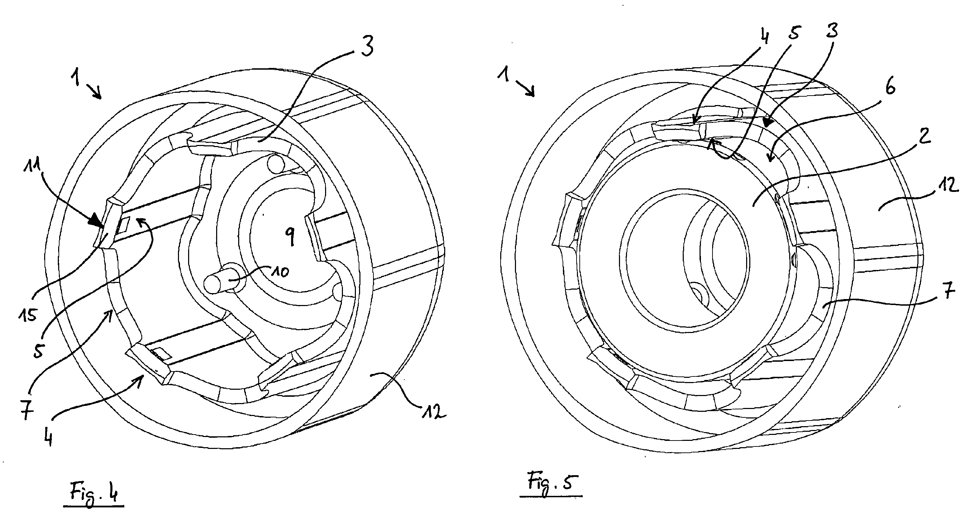

Die zueinander gerichteten Endseiten 13 zweier benachbarter Sektorabschnitte 4 sind über die Bogenabschnitte 7 miteinander verbunden, so dass die Endseiten 13 jeweils auf dem Kreiszylinder liegen, der durch den entsprechenden Bogenabschnitt 7 beschrieben wird. Durch den geringeren Krümmungsradius rₐ der Bodenabschnitte 7 ergeben sich die radialen Ausbuchtungen 6, die aus Sicht der Lagerbuchsenachse 8 konkav geformt sind, d.h. radial nach außen geformt sind. Bei dem Ausführungsbeispiel in Figur 4 entspricht der Krümmungsradius rₐ etwas weniger als die Hälfte des Abstandes rᵢ zwischen Anlagefläche 5 und Lagerbuchsenachse 8.

Die Wand 3 umgibt drei Abstandshalter 10, die sich in gleichen Winkelabständen von 120° von dem in Figur 1 nicht dargestellten Boden 9 erheben. Sie bilden axiale Anschläge für das Lager 2. Des Weiteren wird die Wand 3 selbst von einer weiteren Wand umgeben, die Teil eines Spaltrohrs 12 ist, mit dem die Lagerbuchse 1 einstückig ausgebildet ist.

Figur 2 zeigt die Lagerbuchse 1 im radialen Querschnitt mit eingesetztem Lager 2. Die Ausbuchtungen 6 werden durch die Freiräume zwischen den Bogenabschnitten 7 und dem Lager 2 gebildet. Sie dienen dazu, dass die in dem Spaltrohr befindliche Flüssigkeit durch die Ausbuchtungen 6 an dem Lager 2 vorbeiströmen und den rückwärtigen Bereich der Lagerbuchse 1 fluten kann, so dass einerseits eine Kühlung des Lagers erfolgt, andererseits eine gute Schmierung des Lagers und zusätzlich in der Flüssigkeit enthaltene Schmutzpartikel weggeschwemmt werden.

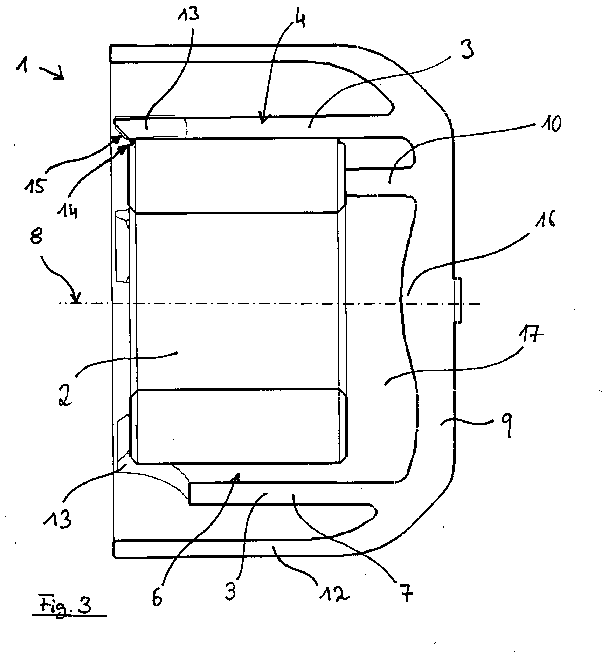

In Figur 3 ist die Lagerbuchse 2 mit eingesetztem Lager 2 in einem Axialschnitt entlang der Lagerbuchsenachse 8 dargestellt. Das Lager 2 liegt rückseitig an den Stirnseiten der zapfenförmigen Abstandshalter 10 an und wird von den Rastnasen 11 der Sektorabschnitte 4 vorderseitig übergriffen. Figur 3 zeigt deutlich, dass der Boden 9 der Lagerbuchse 1 gleichzeitig den Boden des Spaltrohres 12 bildet und der Zwischenraum 17 zwischen dem Boden 9 und dem Lager 9 über die Ausbuchtungen 6 mit dem übrigen Spaltrohrraum vor dem Lager und radial außerhalb der Wand 3 in Verbindung steht, so dass die Lagerbuchse druckneutral in dem Spaltrohr liegt. Der Boden 9 weist eine symmetrische Erhebung 16 in Richtung des Lagers 2 auf. Diese Erhebung 16 entsteht durch eine entsprechende Auswölbung der Kavität in der Spritzgussform, in der das Spaltrohr durch Einspritzen einer Kunststoffformmasse hergestellt wird. Die Auswölbung verbessert die Fließeigenschaft des Kunststoffes beim Spritzvorgang.

Die Anlageflächen 5 sind leicht konisch ausgebildet. Dies hat den Vorteil, dass ein gleichmäßiges Spannungsniveau in der Wand 3 auch über einen Großteil der gesamten axialen Lagerlänge erreicht. Die Anlageflächen 5 verlaufen zwischen 0,5° bis 2° zur Lagerbuchsenachse 8, so dass der elastischere vordere Bereich der Lagerbuchse 1 für die Presspassung ausgenutzt wird, da die Lagerbuchse aufgrund des angeformten Bodens 9 an ihrem anderen Ende eine zunehmend geringere Elastizität besitzt. Die Abstandshalter 10 helfen hier zusätzlich dadurch, dass nur der elastische vordere Bereich der Wand 3 für die Pressverbindung ausgenutzt wird, so dass ein Bruch der Wand am Bodenbereich vermieden wird. Zusätzlich wird hierdurch die Elastizität erhöht.

Figur 4 zeigt die Lagerbuchse 1 ohne Lager in perspektivischer Ansicht. Erkennbar ist die zapfenform der Abstandshalter 10, die sich von dem Boden 9 in axialer Richtung erheben. Die Wand 3 der Lagerbuchse 1 ist mit diesem Boden 9 einstückig ausgebildet. Des Weiteren bildet dieser Boden 9 gleichzeitig den Bodens des Spaltrohres 12.

Schließlich ist in Figur 4 zu erkennen, dass die Sektorabschnitte 4 gegenüber den Bodenabschnitten 7 in axialer Richtung hervorstehen, d.h. länger sind als die Bodenabschnitte 7, wobei die Wand 3 zwischen den Sektorabschnitten 4 bogenförmig abfällt. An ihrem freien axialen Ende weist jeder Sektorabschnitt 4 einen radial nach innen gerichteten Vorsprung 14 auf, der formschlüssig an einer Fase am Außenumfang des Lagers 2 anliegt und dieses übergreift. Die freien axialen Enden der Sektorabschnitte 4 bilden folglich Rastnasen 11, durch die das Lager 2 axial fixierbar ist. Die Stirnseiten 15 der Sektorabschnitte sind abgeschrägt, damit das Lager beim Einsetzen geführt und zentriert wird.

Figur 5 zeigt eine erfindungsgemäße Lagerbuchse 1 innenliegend in einem Spaltrohr 12 mit eingesetztem Lager 2 in perspektivischer Ansicht. Die Lagerbuchse 1 hält einer hohen Druckbeaufschlagung stand und ist resistent gegen Medien mit Additiven und/ oder Inhibitoren.

In einer nicht dargestellten Ausführungsform ist die Wand in Umfangsrichtung wellenförmig. Im Querschnitt betrachtet, liegen die Scheitelpunkte der Wellentäler dann an dem eingesetzten Lager an. Bezogen auf die Länge der Lagerbuchse werden die Anlageflächen dann durch die Talsohle der Wellentäler gebildet. Eine derartige Lagerbuche wird erfindungsgemäß am vorderen Ende eines Spaltrohres verwendet. D.h. es ist an jedem axialen Ende eingesetzt, das bei einem Nassläufermotor zur Pumpe gerichtet ist. Im Querschnitt betrachtet, liegen dann die Scheitelpunkte der Wellenberge an der Innenseite des Spaltrohres an und fixieren und zentrieren die Lagerbuchse im Spaltrohr.

### Bezugszeichenliste

- 1: Lagerbuchse
- 2: Lager
- 3: Wand
- 4: Sektorabschnitte
- 5: Anlageflächen
- 6: Ausbuchtungen
- 7: Bogenabschnitte
- 8: Lagerbuchsenachse
- 9: Boden
- 10: Abstandshalter
- 11: Rastnasen
- 12: Spalttopf
- 13: Endseiten
- 14: Vorsprung
- 15: Abgeschrägte Stirnseite
- 16: Erhebung
- 17: Zwischenraum

## Patentansprüche

1. Lagerbuchse (1) zur Aufnahme eines Lagers (2) für einen Rotor einer elektrischen Maschine, insbesondere einer elektromotorisch angetriebenen Kreiselpumpe, mit einer im Wesentlichen zylindrischen, umlaufend geschlossenen Wand (3), die das Lager (2) in seinem eingesetzten Zustand umgibt, wobei die Wand (3) Sektorabschnitte (4) aufweist, deren radial innenliegende Seiten Anlageflächen (5) bilden, zwischen denen das Lager (2) kraftschlüssig haltbar ist, und wobei die Wand (3) zwischen den Sektorabschnitten (4) radial nach außen gerichtete Ausbuchtungen (6) aufweist **dadurch gekennzeichnet, dass** die Wand (3) aus Kunststoff gebildet ist und dass sich die Sektorabschnitte (4) über einen kleineren Umfangswinkel als die Ausbuchtungen (6) erstrecken, wobei die Ausbuchtungen (6) durch Bogenabschnitte (7) der Wand (3) gebildet sind.

2. Lagerbuche (1) nach Anspruch 1, **dadurch gekennzeichnet, dass** die Ausbuchtungen (6) durch teilkreiszylinderförmige Bogenabschnitte (7) der Wand (3) gebildet sind.

3. Lagerbuche (1) nach Anspruch 2, **dadurch gekennzeichnet, dass** der Krümmungsradius der Bogenabschnitte (7) kleiner als der Abstand einer Anlagefläche (5) zur Lagerbuchsenachse (8) ist, insbesondere zwischen vier und sechs Zehntel dieses Abstandes beträgt.

4. Lagerbuche (1) nach einem der vorherigen Ansprüche, **dadurch gekennzeichnet, dass** die Wand (3) in Umfangsrichtung wellenförmig verläuft, wobei die Anlageflächen (5) durch die innenliegenden Seiten der Wellentäler gebildet sind.

5. Lagerbuchse (1) nach einem der vorherigen Ansprüche, **dadurch gekennzeichnet, dass** die Wand (3) mehrere Ausbuchtungen aufweist, die in gleichen Winkelabständen zueinander verteilt sind.

6. Lagerbuchse (1) nach einem der vorherigen Ansprüche, **dadurch gekennzeichnet, dass** die Dicke der Wand (3) der Sektorabschnitte (4) zumindest teilweise größer ist, als die Dicke der Wand (3) zwischen den Sektorabschnitten (4).

7. Lagerbuchse (1) nach einem der vorherigen Ansprüche, **dadurch gekennzeichnet, dass** sie einen Boden (9) aufweist, mit dem die Wand (3) einstückig ausgebildet ist.

8. Lagerbuchse (1) nach Anspruch 7, **dadurch gekennzeichnet, dass** der Boden (9) zumindest einen Abstandshalter (10) aufweist, an dem das Lager (2) im eingesetzten Zustand anliegt.

9. Lagerbuchse (1) nach Anspruch 7 oder 8, **dadurch gekennzeichnet, dass** die Sektorabschnitte (4) in axialer Erstreckungsrichtung gegenüber der Wand (3) im Bereich der Ausbuchtungen (6) verlängert sind und an ihren offenen Enden Rastnasen (11) zum übergreifen eines Lagers (2) aufweisen.

10. Lagerbuchse (1) nach einem der vorherigen Ansprüche, **dadurch gekennzeichnet, dass** zumindest die Anlageflächen (5) der Sektorabschnitte (4) der Wand (3) in axialer Richtung geringfügig zu Lagerbuchsenachse (8) geneigt sind, insbesondere in einem Winkel zwischen 0,05° und 5° zur Lagerbuchsenachse (8) verlaufen.

11. Lagerbuchse (1) nach einem der vorherigen Ansprüche, **dadurch gekennzeichnet, dass** die Anlageflächen (5) konkav geformt sind.

12. Lagerbuchse (1) nach einem der vorherigen Ansprüche, **dadurch gekennzeichnet, dass** der Abstand der Anlageflächen (5) zur Lagerbuchsenachse (8) 0,5mm bis 1mm kleiner als der Außenradius des Lagers (2) ist.

13. Lagerbuchse (1) nach einem der vorherigen Ansprüche, **dadurch gekennzeichnet, dass** die Wand (3) oder der Boden (9) an ihrer/ seiner zur Lagerbuchsenachse (8) gerichteten Seite zumindest einen Vorsprung aufweist, der in einer Ausnehmung des Lagers (2) in seinem eingesetzten Zustand einliegen kann.

14. Lagerbuchse (1) nach einem der vorherigen Ansprüche, **dadurch gekennzeichnet, dass** sie an einem axialen Ende eines Spaltrohrs (12) für eine Kreiselpumpe angeordnet ist.

15. Lagerbuchse (1) nach einem der Ansprüche 1 bis 13, **dadurch gekennzeichnet, dass** sie und ein Spaltrohr (12) einer Kreiselpumpe einstückig sind, wobei der Boden (9) der Lagerbuchse (1) zumindest einen Teil eines Bodens des Spaltrohrs (12) bildet.

16. Lagerbuchse (1) nach einem der Ansprüche 1 bis 13, **dadurch gekennzeichnet, dass** die Wand (3) der Lagerbuchse (1) ein Teil der Wand eines Spaltrohrs (12) für eine Kreiselpumpe ist.

17. Lagerbuche (1) nach einem der Ansprüche 14 bis 16, **dadurch gekennzeichnet, dass** das Spaltrohr (12) Teil einer Kreiselpumpe ist.

## Claims

1. Bearing bushing (1) to hold a bearing (2) for a rotor in an electrical machine, in particular an electric motor driven rotary pump, with a largely cylindrical, circumferential closed wall (3) that surrounds the bearing (2) in its inserted state, in which the wall (3) has sectors (4), the radial interior sides of which form contact surfaces (5) between which the bearing (2) can be held by force fitting and in which the wall (3) between the sectors (4) has bulges that face radially outward (6), **characterised by** the wall (3) being made of plastic and the sectors (4) extending over a smaller peripheral angle than the bulges (6), in which the bulges (6) are formed by curve sections (7) of the wall (3).

2. Bearing bushing (1) according to claim 1, **characterised by** the bulges (6) being formed by the pitch circle cylindrical curve sections (7) of the wall (3).

3. Bearing bushing (1) according to claim 2, **characterised by** the curvature radius of the curve sections (7) being smaller than the distance between a contact surface (5) and the bearing bushing axis (8), in particular being between four and six tenths of this distance.

4. Bearing bushing (1) according to one of the preceding claims, **characterised by** the course of the wall (3) undulating in the circumferential direction, in which the contact surfaces (5) are formed by the interior sides of the troughs.

5. Bearing bushing (1) according to one of the preceding claims, **characterised by** the wall (3) having several bulges distributed at even angular distances from each other.

6. Bearing bushing (1) according to one of the preceding claims, **characterised by** the thickness of the wall (3) of the sectors (4) at least in part being greater than the thickness of the wall (3) between the sectors (4).

7. Bearing bushing (1) according to one of the preceding claims, **characterised by** having a floor (9) formed in one piece with the wall (3).

8. Bearing bushing (1) according to claim 7, **characterised by** the floor (9) having at least one spacer (10) that is contacted by the bearing (2) in the inserted state.

9. Bearing bushing (1) according to claim 7 or 8, **characterised by** the sectors (4) being elongated in the axial direction of their extent relative to the wall (3) in the area of the bulges (6) and having lugs (11) at their open ends to overlap a bearing (2).

10. Bearing bushing (1) according to one of the preceding claims, **characterised by** at least one of the contact surfaces (5) of the sectors (4) of the wall (3) being slightly angled in the axial direction relative to the bearing bushing axis (8), in particular running at an angle between 0.05° and 5° to the bearing bushing axis (8).

11. Bearing bushing (1) according to one of the preceding claims, **characterised by** the contact surfaces (5) having a concave shape.

12. Bearing bushing (1) according to one of the preceding claims, **characterised by** the distance between the contact surfaces (5) and the bearing bushing axis (8) being 0.5mm to 1mm smaller than the outside radius of the bearing (2).

13. Bearing bushing (1) according to one of the preceding claims, **characterised by** the wall (3) or the floor (9) at its side facing the bearing bushing axis (8) having at least one projection that can engage in a recess of the bearing (2) in its inserted state.

14. Bearing bushing (1) according to one of the preceding claims, **characterised by** being arranged at one axial end of a split tube (12) for a rotary pump.

15. Bearing bushing (1) according to one of claims 1 through 13, **characterised by** it and a split tube (12) of a rotary pump being of one piece, in which the floor (9) of the bearing bushing (1) forms at least part of a floor of the split tube (12).

16. Bearing bushing (1) according to one of claims 1 through 13, **characterised by** the wall (3) of the bearing bushing (1) being part of the wall of a split tube (12) for a rotary pump.

17. Bearing bushing (1) according to one of claims 14 through 16, **characterised by** the split tube (12) being part of a rotary pump.

## Revendications

1. Douille de palier (1) de réception d'un palier (2) pour le rotor d'une machine électrique, tout particulièrement une pompe centrifuge à moteur électrique, avec une paroi (3) sensiblement cylindrique, fermée en sa périphérie et entourant le palier (2) à l'état inséré, sachant que la paroi (3) présente des sections de secteur (4), dont les côtés placés de façon radiale à l'intérieur créent des surfaces de contact (5), entre lesquelles le palier (2) est maintenu par force, et sachant que la paroi (3) présente, entre les sections de secteur (4), des renflements (6) orientés de façon radiale vers l'extérieur **caractérisé en ce que** la paroi (3) est en matière plastique et que les sections de secteur (4) présente un angle circonférentiel plus petit que celui des renflements (6), sachant que ces renflements (6) sont constitués par des parties arquées (7) de la paroi (3).

2. Douille de palier (1) selon la revendication 1, **caractérisée en ce que** les renflements (6) sont formés de parties arquées (7) de la paroi (3) de forme partiellement cylindrique circulaire.

3. Douille de palier (1) selon la revendication 2, **caractérisée en ce que** le rayon de courbure des parties arquées (7) est inférieur à l'écart entre une surface de contact (5) et l'axe de la douille de palier (8), et mesure plus particulièrement entre quatre et six dixièmes de cet écart.

4. Douille de palier (1) selon l'une des revendications précédentes, **caractérisée en ce que** la paroi (3) est ondulée dans le sens de la circonférence, sachant que les surfaces de contact (5) sont formées des côté intérieurs des creux de ces ondulations.

5. Douille de palier (1) selon l'une des revendications précédentes, **caractérisée en ce que** la paroi (3) présente plusieurs renflements, répartis avec une distance angulaire identique.

6. Douille de palier (1) selon l'une des revendications précédentes, **caractérisée en ce que** l'épaisseur de la paroi (3) des sections de secteur (4) est du moins en partie plus grande que l'épaisseur de la paroi (3) entre les sections de secteur (4).

7. Douille de palier (1) selon l'une des revendications précédentes, **caractérisée en ce qu'**elle présente un fond (9) faisant corps avec la paroi (3).

8. Douille de palier (1) selon la revendication 7, **caractérisée en ce que** le fond (9) présente au moins une entretoise (10) sur laquelle repose le palier (2) à l'état inséré.

9. Douille de palier (1) selon les revendications 7 ou 8, **caractérisée en ce que** les sections de secteur (4) sont prolongées en direction d'extension axiale par rapport à la paroi (3) dans la zone des renflements (6) et présentent à leurs extrémités ouvertes des ergots d'encliquetage (11) destinés à recevoir le palier (2).

10. Douille de palier (1) selon l'une des revendications précédentes, **caractérisée en ce qu'**au moins les surfaces de contact (5) des sections de secteur (4) de la paroi (3) sont légèrement inclinées en direction axiale par rapport à l'axe de la douille de palier (8), en particulier avec un angle entre 0,05° et 5° par rapport à l'axe de la douille de palier (8).

11. Douille de palier (1) selon l'une des revendications précédentes, **caractérisée en ce que** les surfaces de contact (5) sont concaves.

12. Douille de palier (1) selon l'une des revendications précédentes, **caractérisée en ce que** l'écart entre les surfaces de contact (5) et l'axe de la douille de palier (8) est inférieur de 0,5 à 1 mm au rayon extérieur du palier (2).

13. Douille de palier (1) selon l'une des revendications précédentes, **caractérisée en ce que** la paroi (3) ou le fond (9) de leur côté orienté vers l'axe de la douille de palier (8) présente au moins une saillie pouvant rentrer dans un renfoncement du palier (2) à l'état inséré.

14. Douille de palier (1) selon l'une des revendications précédentes, **caractérisée en ce qu'**elle est disposée à l'extrémité axiale d'une gaine (12) pour une pompe centrifuge.

15. Douille de palier (1) selon l'une des revendications 1 à 13, **caractérisée en ce qu'**elle fait corps avec une gaine (12) d'une pompe centrifuge, sachant que le fond (9) de la douille de palier (1) forme au moins une partie d'un fond de la gaine (12).

16. Douille de palier (1) selon l'une des revendications 1 à 13, **caractérisée en ce que** la paroi (3) de la douille de palier (1) forme une partie de la paroi d'une gaine (12) pour une pompe centrifuge.

17. Douille de palier (1) selon l'une des revendications 14 à 16, **caractérisée en ce que** la gaine (12) fait partie d'une pompe centrifuge.
